# EUROPÄISCHE PATENTANMELDUNG

(11) **EP 2 354 676 A2**
(43) Veröffentlichungstag der Anmeldung: **10.08.2011**
(21) Anmeldenummer: 11151800.7
(22) Anmeldetag: 24.01.2011
(51) Int. Cl.: F24D 3/18

(54) **Klimatisierungseinrichtung und Verfahren zur Optimierung einer geothermischen Energieversorgung**

(30) Priorität: 26.01.2010 DE 102010005608
(71) Anmelder: Robert Bosch GmbH, 70442 Stuttgart (DE)
(72) Erfinder: Oertel, Kai, 70569, Stuttgart (DE); Koebbemann-Rengers, Ralf, 48493, Wettringen (DE)

(57) **Zusammenfassung**

Die Erfindung betrifft ein Verfahren zur Optimierung einer Energieversorgung, bei der zirkulierend zwischen einer erneuerbaren Wärmeenergiequelle und einer Wärmeenergiesenke Wärmeenergie übertragen wird. Zudem betrifft die Erfindung eine Klimatisierungseinrichtung zur Optimierung einer Energieversorgung, bei der zirkulierend zwischen einer erneuerbaren Wärmeenergiequelle und einer Wärmeenergiesenke, insbesondere einer Heizeinrichtung, Wärmeenergie übertragen wird.

Es ist eine Aufgabe der Erfindung, ein Verfahren und eine Klimatisierungseinrichtung zu schaffen, die auch für kleinere Anlagen eine einfache Umsetzung eines Geothermiebetriebs ermöglichen. Insbesondere ist es eine Aufgabe der vorliegenden Erfindung, einen Betrieb von Wärmepumpen, insbesondere von kleineren Wärmepumpen mit einer Leistung < 30 kW, für die keine Auslegung mit einem vorangehenden Thermo-Response Verfahren durchgeführt werden, zu optimieren.

Gekennzeichnet sind das Verfahren und die Klimatisierungseinrichtung dadurch, dass ein Transport der Wärmeenergie zwischen der Wärmeenergiequelle und der Wärmeenergiesenke zumindest in eine Richtung in Abhängigkeit von einem Wärmevorrat der Wärmeenergiequelle und/oder der Wärmeübertragungsfluids geregelt durchgeführt wird.

## Beschreibung

Die Erfindung betrifft eine Verfahren zur Optimierung einer Energieversorgung, bei der zirkulierend zwischen einer erneuerbaren Wärmeenergiequelle, insbesondere einem Erdreich, und einer Wärmeenergiesenke, insbesondere einer Heizeinrichtung, Wärmeenergie übertragen wird, nach dem Oberbegriff des Anspruchs 1.

Zudem betrifft die Erfindung eine Klimatisierungseinrichtung, insbesondere eine geothermisch betriebene Klimatisierungseinrichtung, zur Optimierung einer Energieversorgung, bei der zirkulierend zwischen einer erneuerbaren Wärmeenergiequelle, insbesondere einem Erdreich, und einer Wärmeenergiesenke, insbesondere einer Heizeinrichtung, Wärmeenergie übertragen wird, nach Anspruch 8.

Verfahren und Klimatisierungseinrichtungen zur geothermischen Energieübertragung sind aus dem Stand der Technik bekannt. Bei den bekannten Lösungen kommen Wärmepumpen zum Einsatz. Die Wärmepumpen nutzen zur Wärmeerzeugung elektrische, thermische oder motorisch erzeugte Energie sowie Wärme aus der Umwelt im Verhältnis von etwa 1 : 3 bis 1 : 4. Zum Betrieb von Wärmepumpen ist die Erschließung einer Wärmequelle mit Umweltwärme erforderlich. Üblich sind hierfür Luft, Brunnenwasser oder Erdreich. Ein Heizen in einem Haus erfolgt beispielsweise über eine Fußbodenheizung. Die Wärme aus dem Erdreich wird bevorzugt über Erdwärmesonden oder Erdkollektoren erschlossen. Das Erdreich zeichnet sich dabei durch eine hohe Wärmespeicherfähigkeit aus. Durch die Wärmespeicherfähigkeit des Erdreichs steht relativ unabhängig von der Jahreszeit eine Wärmequelle zur Verfügung. Bei der Auslegung der Wärmepumpen sind die maximale kurzfristige Leistungsentnahme und die langfristige mögliche Wärmeentnahme zu bestimmen, sodass durch die Wärmepumpe nicht dauerhaft mehr Wärme entnommen wird, als nachgeführt werden kann. Grundlage für diese Berechnung ist eine Energiebilanz für das Erdreich. DIN 4640 Blatt 2 gibt für die maximale Endnahmearbeit in Abhängigkeit der Bodenbeschaffenheit Grenzwerte für den Erdkollektor von 18-75 kWh/m²a an. Werden die Grenzwerte überschritten, so sinkt die Temperatur des Erdreichs bis zur Einsatzgrenze der Wärmepumpe ab, sodass die sich Jahresarbeitszahl entsprechend reduziert. Im Extremfall kann dies zu einer Vereisung des Erdreiches an der Entnahmestelle und damit insbesondere bei Erdkollektoren zu einem Einbruch der Wärmepumpenleistung führen. Durch die verschiedenen geologischen Gegebenheiten fällt die Wärmezufuhr im Boden stark unterschiedlich aus. Die Wärmeleitfähigkeit variiert von 0,4 bis 6 W/(mK), die spez. Wärmkapazität von 0,5 bis 3 MJ/(m³K). Um eine kostenintensive Überdimensionierung der Quelle zu vermeiden, ist insbesondere bei der Nutzung der Wärme durch Erdsonden und Erdkollektoren eine genaue Auslegung erforderlich. Eine Grundlage hierfür bietet das in der Regel bei Großanlagen (> 30 kW) ausgeführte Thermal-Response-Verfahren.

Aus der EP 1 959 213 ist ein Thermal-Response-Verfahren bekannt. Das in diesem Dokument beschriebene Verfahren zur Bestimmung vertikaler Variationen der Wärmeleitfähigkeit im Untergrund in Bohrungen, insbesondere in Erdwärmesonden, umfasst die Schritte:
- Messung des ungestörten Temperaturprofils T1 (z) als Funktion der Tiefe,
- Injektion von Wärme in den Untergrund durch Zirkulieren eines erwärmten Fluids in der Bohrung,
- Regeneration der Bodentemperatur über einen vorgegebenen Zeitraum,
- Messung des regenerierten Temperaturprofils T2(z) als Funktion der Tiefe,
- Simulation an einem Modell entsprechender numerisch berechneter Temperaturprofile
   T1ₙ(z) für "ungestörte" Temperaturprofile und
   T2ₙ(z) für "regenerierte" Temperaturprofile unter Zugrundelegung verschiedener theoretischer Untergrundparameter, die mit Hilfe inverser numerischer Verfahren den gemessenen Temperaturprofilen T1 (z) und T2(z) angeglichen werden, womit ein berechnetes Profil wahrscheinlicher Untergrundparameter ermittelt wird.

Somit wird an einer Probebohrung über mehrere Tage das Erdreich thermisch angeregt, indem eine konstante Heizleistung in die Sonde eingebracht wird. Die Temperatur am Austritt der Sonde wird erfasst, und damit über ein Modell Wärmeleitung und spezifische Wärmekapazität des Erdreichs berechnet. Für die dynamische Berechnung im Nahbereich, mit einem Radius von 3-4 m um die Sonde, kann dann das Erdreich mit zylindrischen Ringen beschrieben und das Temperaturprofil über ein Differenzenverfahren nach Crank-Nicholson berechnet werden.

Für die dynamische Berechnung im Nahbereich, mit einem Radius von 3-4 m um die Sonde, wird das Erdreich mit zylindrischen Ringen beschrieben und das Temperaturprofil wird über das Differenzenverfahren nach Crank-Nicholson berechnet. Zur Berechnung der Temperaturen der ringförmigen Zylinderelemente des Erdreichs um die Bohrsonde über Differenzialgleichungen werden Randbedingungen erster Art angesetzt: Im Inneren des Rings ist dies die Sondentemperatur und auf der Außenseite die Temperatur des Erdreichs. Die Temperatur für das Erdreich wird nach der Trichterformel von Werner basierend auf dem Kleinschen Linienquellentheorem bestimmt. Dabei wird der Temperatureinfluss durch den zeitlich unterschiedlichen Wärmeentzug außerhalb des Nahbereichs der Sonde als einer Überlagerung beschrieben, sodass die Wärmekapazität in diesem Bereich unter gewissen Einschränkungen vernachlässigt werden kann. Für die Berechnung sind somit Wärmekapazität und Wärmeleitfähigkeit der Knoten erforderlich. Als Ergebnis ist eine Aussage über die Temperaturverhältnisse im Erdreich bei vorgegebenen Entnahme-, oder auch Beladeleistung möglich. Eine Umsetzung der Berechnung findet sich beispielsweise im Modul EWS für TRNSYS von Wetter. Beim Betrieb von Wärmepumpen gilt Folgendes. Der Wärmeentzug aus der Quelle durch die Wärmepumpe erfolgt nach dem Stand der Technik ungeregelt. Entsprechend der Wärmeanforderung arbeitet die Wärmepumpe und entzieht der Quelle die Wärme. Dabei beeinflusst das Temperaturniveau der Quelle die Effizienz der Wärmepumpe (COP). Mit sinkender Quellentemperatur sinkt der COP der Wärmepumpe und damit verlängert sich die Laufzeit. Im Grenzfall, COP = 1, basiert die Heizleistung nur auf der Antriebsenergie der Wärmepumpe und es wird zusätzlich keine Umgebungswärme genutzt.

Wie anhand der vorstehenden, ausführlichen Aufführung ersichtlich, ist eine Auslegung von Klimatisierungseinrichtungen gemäß dem Stand der Technik sehr aufwendig. Gerade auch für kleinere Anlagen ist eine solche Auslegung wirtschaftlich nicht durchführbar.

Der Erfindung liegt die Aufgabe zugrunde, ein Verfahren und eine Klimatisierungseinrichtung zu schaffen, die auch für kleinere Anlagen eine einfache Umsetzung eines Geothermiebetriebs ermöglichen. Insbesondere ist es eine Aufgabe der vorliegenden Erfindung, einen Betrieb von Wärmepumpen, insbesondere von kleineren Wärmepumpen mit einer Leistung < 30 kW, für die keine Auslegung mit einem vorangehenden Thermo-Response Verfahren durchgeführt werden, zu optimieren.

Erfindungsgemäß wird dies durch die Gegenstände mit den Merkmalen des Patentanspruches 1 und des Patentanspruchs 8 gelöst. Vorteilhafte Weiterbildungen sind den Unteransprüchen zu entnehmen.

Das erfindungsgemäße Verfahren zur Optimierung einer Energieversorgung, bei der zirkulierend zwischen einer erneuerbaren Wärmeenergiequelle, insbesondere einem Erdreich, und einer Wärmeenergiesenke, insbesondere einer Heizeinrichtung, mittels einer Wärmepumpe und eines Wärmeübertragungsfluids Wärmeenergie übertragen wird, sodass ein Kreislauf ausgebildet ist, ist **dadurch gekennzeichnet, dass** ein Transport der Wärmeenergie zwischen der Wärmeenergiequelle und der Wärmeenergiesenke zumindest in eine Richtung in Abhängigkeit von einem Wärmevorrat der Wärmeenergiequelle und/oder des Wärmeübertragungsfluids geregelt durchgeführt wird.

In einer vorteilhaften Ausführungsform der vorliegenden Erfindung ist vorgesehen, dass das Regeln ein Begrenzen einer maximalen Wärmeenergieübertragungsmenge zu der Wärmeenergiesenke umfasst, um zumindest ein übermäßiges Abkühlen und/oder Erwärmen der Wärmeenergiequelle zu verhindern.

In einer anderen vorteilhaften Ausführungsform der vorliegenden Erfindung ist vorgesehen, dass das Regeln eine Ausgleichswärmeenergieübertragung umfasst, bei dem eine zusätzliche Wärmeenergieübertragung zu und/oder von der Wärmeenergiequelle durchgeführt wird, um zumindest ein übermäßiges Abkühlen und/oder Erwärmen der Wärmeenergiequelle zu verhindern.

Insbesondere sieht eine weitere Ausführungsform der vorliegenden Erfindung vor, dass das Regeln über ein die Wärmeenergiequelle beschreibendes parameterbasiertes Modell durchgeführt wird, bei dem Betriebsdaten erfasst werden und aus den erfassten Betriebsdaten das parameterbasierte Modell erstellt wird.

In einer bevorzugten Ausführungsform der vorliegenden Erfindung ist vorgesehen, dass das Regeln selbstlernend durchgeführt wird, indem eine Betriebsanpassung an die aktuellen Betriebsdaten durch wiederholtes Überprüfen von Parametern des Modells durchgeführt wird.

In einer anderen Ausführungsform der erfindungsgemäßen des Verfahrens ist vorgesehen, dass mindestens eine Temperatur in einem Vorlauf und eine Temperatur in einem Rücklauf des Kreislaufs erfasst werden und anhand der erfassten Temperaturen eine temperaturniveauabhängige und/oder wärmebilanzabhängiger Wärmeenergieübertragung durchgeführt wird.

Bei einer weiteren Ausführungsform ist vorgesehen, dass die Anfangswerte für das Regeln über eine Wärmeenergiequellenanregung gewonnen werden.

Die erfindungsgemäße Klimatisierungseinrichtung, insbesondere eine geothermisch betriebene Klimatisierungseinrichtung, zur Optimierung einer Energieversorgung, bei der zirkulierend zwischen einer erneuerbaren Wärmeenergiequelle, insbesondere einem Erdreich, und einer Wärmeenergiesenke, insbesondere einer Heizeinrichtung, mittels einer Wärmepumpe und eines Wärmeübertragungsfluids Wärmeenergie übertragen wird, sodass ein Kreislauf ausgebildet ist, ist **dadurch gekennzeichnet, dass** mindestens eine Regeleinrichtung zur Regelung einer Wärmeübertragung vorgesehen ist, sodass die Wärmeübertragung zwischen der Wärmeenergiequelle und der Wärmeenergiesenke zumindest in eine Richtung in Abhängigkeit von einem Wärmevorrat der Wärmeenergiequelle und/oder des Wärmeübertragungsfluids geregelt durchgeführt wird.

In einer Ausführungsform des erfindungsgemäßen Verfahrens ist vorgesehen, dass die Regeleinrichtung in dem als Wärmeübertragungsfluidkreislauf ausgebildeten Kreislauf mindestens einen Temperatursensor in einem Vorlauf und mindesten einen Temperatursensor in einem Rücklauf aufweist.

In noch einer weiteren Ausführungsform der vorliegenden Erfindung ist vorgesehen, dass die Regeleinrichtung eine Auswerteelektronik aufweist, mit welcher eine temperaturniveauabhängige und/oder wärmebilanzabhängige Steuerung einer Wärmeenergieübertragungseinheit, wie einer Wärmepumpe, durchführbar ist.

Mit der erfindungsgemäßen Klimatisierungseinrichtung und dem erfindungsgemäßen Verfahren werden insbesondere die folgenden Vorteile realisiert:
Durch eine Regelung der Wärmeübertragung wird ein übermäßiger Wärmeentzug der Wärmeenergiequelle, der zu einem Vereisen der Umgebung der Wärmeenergiequelle, das heißt des Erdreichs, führen kann, verhindert. Wird das Erdreich im Sommer als Wärmespeicher in Verbindung mit einer Solaranlage oder als Wärmesenke einer Klimatisierung genutzt, kann mit Kenntnis der thermischen Beschaffenheit des Bodens das Speichermanagement optimiert werden. Sind alternative Wärmeerzeuger oder Speicher verfügbar, kann der Anlagenbetrieb entsprechend gefahren werden. Über ein Identifikationsverfahren wird von der Wärmepumpenregelung, basierend auf den Algorithmen des Thermal-Response-Verfahrens die Wärmeleitfähigkeit und die spezifische Wärmkapazität des Erdreichs um die Erdsonde bestimmt, um damit die Betriebsstrategie der Wärmepumpe auf einen möglichst robusten Betrieb einzustellen. Wenn erforderlich wird die Maximal- oder die Dauerleistung reduziert, um den Anlagenbetrieb langfristig sicher zu stellen. Durch Einsatz alternativer Wärmeerzeuger wird dann beispielsweise bereits früher "zugeheizt". Das Erdreich wird dadurch dann nicht so weit abkühlt, dass von der Wärmepumpe die erforderte Leistung nicht oder nur mit niedrigem COP erbracht werden kann. Sollten langfristig saisonal unterschiedliche Strompreise vorliegen, kann durch eine entsprechende Steuerung ein wirtschaftlicher Vorteil erzielt werden. Die Wärmespeicherfähigkeit des Erdreichs wird genutzt, um z. B. mit einer besseren Effizienz durch eine höhere Erdreichtemperatur bei hohen Strompreisen im Februar Kosten einzusparen, indem bei niedrigen Strompreisen im Oktober das Erdreich nur geringer abgekühlt wird. Das Verfahren und die Klimatisierungseinrichtung sind auch ohne vorherige Auslegung der Wärmepumpe betreibbar.

Die Zeichnungen stellen ein Ausführungsbeispiel der Erfindung dar und zeigen in den Figuren
- Fig. 1: schematisch in einem Blockschaltbild eine Klimatisierungseinrichtung und
- Fig. 2: schematisch eine Regelungsablauf der Klimatisierungseinrichtung.

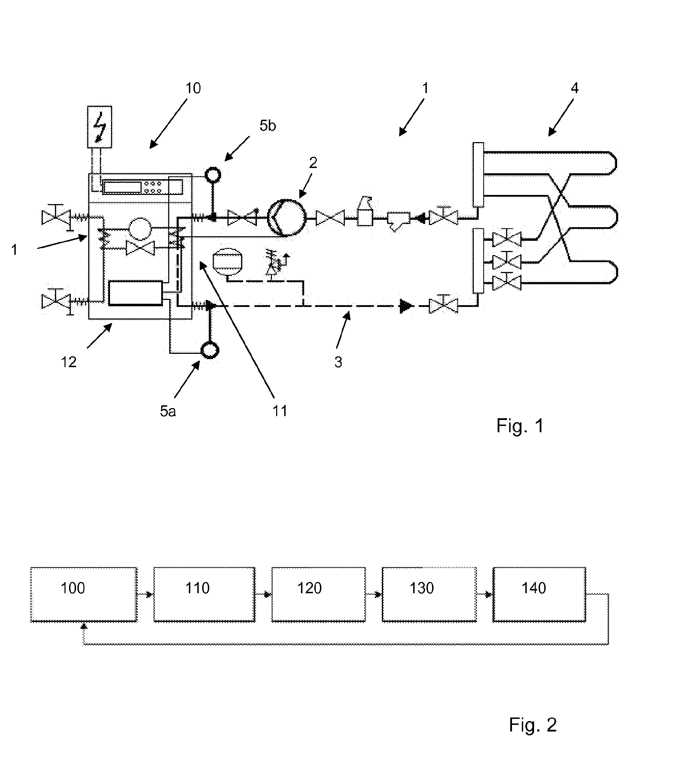

Die Fig. 1 zeigt schematisch in einem Blockschaltbild eine Klimatisierungseinrichtung 1. Die Klimatisierungseinrichtung 1 umfasst neben einer Heizungsanlage 10 (dies ist im wesentlichen die Wärmepumpe, dargestellt durch den inneren Kreislauf) einen als Solekreislauf oder Wärmeübertragungsfluidkreislauf ausgebildeten Kreislauf 3, in dem ein Wärmeübertragungsfluid zirkuliert. Der Kreislauf 3 umfasst als Erdsonden ausgebildete (Erd-)Wärmeübertrager 4, mit den Wärme zwischen der Umgebung, beispielsweise dem Erdreich, und dem Wärmeübertragungsfluid übertragen wird. Über eine Solepumpe 2 wird das Wärmeübertragungsfluid in einem Rücklauf zu der Heizungsanlage 10 gefördert. Über einen Wärmetauscher 11 wird die mit dem Wärmeübertragungsfluid des Kreislaufs 3 geförderte Wärme an die Heizungsanlage 10 übertragen und dort entsprechend über eine hier nicht dargestellte Wärmesenke (Kreislauf 1) abgegeben. Zur Regelung der Wärmeübertragung zwischen der Umgebung und dem Kreislauf 3 ist eine Regeleinrichtung 12 vorgesehen. Die Regeleinrichtung 12 regelt die Wärmeübertragung zwischen der als Wärmeenergiequelle fungierenden Umgebung und der Wärmeenergiesenke in Abhängigkeit von einem Wärmevorrat der Wärmeenergiequelle und/oder des Wärmeübertragungsfluids. Dabei ist die Regeleinrichtung 12 so ausgebildet, dass diese eine maximale Wärmeübertragungsmenge von der Wärmeenergiequelle zu der Wärmeenergiesenke begrenzt, um ein übermäßiges Abkühlen und/oder Erwärmen der Wärmeenergiequelle zu verhindern. Um ein übermäßiges Abkühlen und/oder Erwärmen der Wärmeenergiequelle zu verhindern, ist eine Ausgleichswärmeenergieübertragung vorgesehen, die bei Bedarf eine zusätzliche Wärmeenergieübertragung zu und/oder von der Wärmeenergiequelle durchführt. Die Regeleinrichtung 12 ist mit einem Temperatursensor 5a in einem Vorlauf des Kreislaufs 3 und mit einem Temperatursensor 5b in einem Rücklauf des Kreislaufs 3 gekoppelt. Anhand der mit den Temperatursensoren 5 erfassten Temperaturen wird die Regelung temperaturniveauabhängig und/oder wärmebilanzabhängig durchgeführt. Die Anfangswerte für das Regeln werden über eine Wärmeenergiequellenanregung gewonnen. Genauer ist zur Überwachung einer Soletemperatur oder einer Temperatur des Wärmeübertragungsfluids im Rücklauf des Solekreises eine Temperaturmessung mittels des Temperatursensors 5b vorhanden. Über den Rücklauf wird Wärmeenergie in die Umgebung, beispielsweise das Erdreich, eingebracht. Zur Bilanzierung der eingebrachten Wärme in das Erdreich ist der weitere Temperatursensor 5a im Vorlauf des Solekreislaufs erforderlich. Um eine möglichst exakte Regelung zu bewirken, ist eine definierte Anregung des Erdreichs mit vorgegebenem Wärmeeintrag vorgesehen. Diese Anregung wird über eine drehzahlgeregelte Pumpe oder eine definierte steuerbare Wärmequelle durchgeführt. Zusätzlich ist in einer Ausgestaltung vorgesehen, dass einzelne oder alle Ventile im Kreislauf 3 gezielt geregelt oder angesteuert werden. Die Regeleinrichtung 12 umfasst eine Auswerteelektronik, mit der die erfassten Werte für eine optimale Regelung ausgewertet werden. Eine von der Regeleinrichtung 12 umfasste Steuerung der Wärmepumpe 2 ist derart erweitert, dass damit eine Datenerfassung von Messwerten sowie die Auswerteprozeduren umgesetzt werden. Weiter umfasst die Regeleinrichtung 12 einen Abschnitt, um das Regeln über ein die Wärmeenergiequelle beschreibendes parameterbasiertes Modell durchzuführen, bei dem Betriebsdaten erfasst werden und aus den erfassten Betriebsdaten das parameterbasierte Modell erstellt wird. Die Regelung ist in Fig. 2 detaillierter beschrieben.

Fig. 2 zeigt schematisch einen Regelungsablauf der Klimatisierungseinrichtung 1. Der Regelungsablauf umfasst die folgenden Schritte: Erfassen von Betriebsdaten 100, Erstellen und Parametrisieren des Modells 110, Anpassen der Betriebsstrategie 120, Betrieb 130 und wiederholte Prüfung 140. Diese Schritte werden in dieser Abfolge wiederholt ausgeführt.

Zur Erfassung der Messwert wird wie folgt vorgegangen.

Für die Datenbasis zur Identifikation der thermischen Parameter des Erdreichs werden die Messdaten aus dem normalen Betrieb genutzt. Alternativ oder ergänzend werden Daten genutzt, die gemäß eines Thermal-Response-Verfahrens mittels einer gezielten Anregung des Erdreichs über eine definierte Aufheizung oder Abkühlung erfolgen, ermittelt werden. Wird das Erdreich als sommerlicher Wärmespeicher für die Solaranlage oder als Kältequelle einer Klimaanlage genutzt, so wird diese Funktion zum gezielten Erwärmen des Erdreichs für ein Thermal-Response-Verfahren genutzt. Durch eine gezielte Anregung wird sichergestellt, dass die Messwerte ausreichend Informationen für die anschließende Identifikation enthalten.

Über eine Optimierungsrechnung werden Modellparameter der Wärmequelle entsprechend dem Vorgehen bei Thermal-Response-Verfahren ermittelt.

Basierend auf den in der Optimierung ermittelten thermischen Parametern des Erdreichs wird die Betriebsstrategie der Wärmepumpe 2 angepasst. Dabei wird die maximale Wärmeleistung bzw. Wärmemenge begrenzt, sodass keine nachhaltige Abkühlung des Erdreichs eintritt. Wird das Erdreich als Speicher genutzt, so wird das Speichermanagement bei Be- und Entladung entsprechend angepasst. Über eine regelmäßig wiederholte Identifikation der Erdreichparameter wird die Qualität der Parameter ständig verbessert und gleichzeitig werden Veränderungen oder Störungen im Bereich der Erdwärmequelle erfasst.

## Patentansprüche

1. Verfahren zur Optimierung einer Energieversorgung, bei der zirkulierend zwischen einer erneuerbaren Wärmeenergiequelle, insbesondere einem Erdreich, und einer Wärmeenergiesenke, insbesondere einer Heizeinrichtung, mittels einer Wärmepumpe (2) und eines Wärmeübertragungsfluids Wärmeenergie übertragen wird, sodass ein Kreislauf (3) ausgebildet ist, **dadurch gekennzeichnet, dass**
ein Transport der Wärmeenergie zwischen der Wärmeenergiequelle und der Wärmeenergiesenke zumindest in eine Richtung in Abhängigkeit von einem Wärmevorrat der Wärmeenergiequelle und/oder des Wärmeübertragungsfluids geregelt durchgeführt wird.

2. Verfahren nach Anspruch 1, **dadurch gekennzeichnet, dass**
das Regeln ein Begrenzen einer maximalen Wärmeenergieübertragungsmenge zu der Wärmeenergiesenke umfasst, um zumindest ein übermäßiges Abkühlen und/oder Erwärmen der Wärmeenergiequelle zu verhindern.

3. Verfahren nach Anspruch 1 oder 2, **dadurch gekennzeichnet, dass** das Regeln eine Ausgleichswärmeenergieübertragung umfasst, bei dem eine zusätzliche Wärmeenergieübertragung zu und/oder von der Wärmeenergiequelle durchgeführt wird, um zumindest ein übermäßiges Abkühlen und/oder Erwärmen der Wärmeenergiequelle zu verhindern.

4. Verfahren nach einem der vorherigen Ansprüche 1 bis 3, **dadurch gekennzeichnet, dass**
das Regeln über ein die Wärmeenergiequelle beschreibendes parameterbasiertes Modell durchgeführt wird, bei dem Betriebsdaten erfasst werden und aus den erfassten Betriebsdaten das parameterbasierte Modell erstellt wird.

5. Verfahren nach einem der vorherigen Ansprüche 1 bis 4, **dadurch gekennzeichnet, dass**
das Regeln selbstlernend durchgeführt wird, indem eine Betriebsanpassung an die aktuellen Betriebsdaten durch wiederholtes Überprüfen von Parametern des Modells durchgeführt wird.

6. Verfahren nach einem der vorherigen Ansprüche 1 bis 5, **dadurch gekennzeichnet, dass**
mindestens eine Temperatur in einem Vorlauf und eine Temperatur in einem Rücklauf des Kreislaufs (3) erfasst werden und anhand der erfassten Temperaturen eine temperaturniveauabhängige und/oder wärmebilanzabhängiger Wärmeenergieübertragung durchgeführt wird.

7. Verfahren nach einem der vorherigen Ansprüche 1 bis 6, **dadurch gekennzeichnet, dass**
die Anfangswerte für das Regeln über eine Wärmeenergiequellenanregung gewonnen werden.

8. Klimatisierungseinrichtung (1), insbesondere eine geothermisch betriebene Klimatisierungseinrichtung (1), zur Optimierung einer Energieversorgung, bei der zirkulierend zwischen einer erneuerbaren Wärmeenergiequelle, insbesondere einem Erdreich, und einer Wärmeenergiesenke, insbesondere einer Heizeinrichtung, mittels einer Wärmepumpe (2) und eines Wärmeübertragungsfluids Wärmeenergie übertragen wird, sodass ein Kreislauf (3) ausgebildet ist, **dadurch gekennzeichnet, dass** mindestens eine Regeleinrichtung (4) zur Regelung einer Wärmeübertragung vorgesehen ist, sodass die Wärmeübertragung zwischen der Wärmeenergiequelle und der Wärmeenergiesenke zumindest in eine Richtung in Abhängigkeit von einem Wärmevorrat der Wärmeenergiequelle und/oder des Wärmeübertragungsfluids geregelt durchgeführt wird.

9. Klimatisierungseinrichtung (1) nach Anspruch 8, **dadurch gekennzeichnet, dass** die Regeleinrichtung (4) in dem als Wärmeübertragungsfluidkreislauf ausgebildeten Kreislauf (3) mindestens einen Temperatursensor (5a) in einem Vorlauf und mindesten einen Temperatursensor (5b) in einem Rücklauf aufweist.

10. Klimatisierungseinrichtung (1) nach Anspruch 8 oder 9, **dadurch gekennzeichnet, dass**
die Regeleinrichtung (4) eine Auswerteelektronik aufweist, mit welcher eine temperaturniveauabhängige und/oder wärmebilanzabhängige Steuerung einer Wärmeenergieübertragungseinheit, wie einer Wärmepumpe (2), durchführbar ist.
